Europäisches Patentamt

European Patent Office

Office européen des brevets

(11) Numéro de publication : **0 430 783 B1**

(12) # FASCICULE DE BREVET EUROPEEN

(45) Date de publication du fascicule du brevet :
**04.01.95 Bulletin 95/01**

(51) Int. Cl.$^6$ : **H01S 3/30**

(21) Numéro de dépôt : **90403325.5**

(22) Date de dépôt : **23.11.90**

(54) **Dispositif laser à longueur d'onde élevée.**

(30) Priorité : **01.12.89 FR 8915874**

(43) Date de publication de la demande :
**05.06.91 Bulletin 91/23**

(45) Mention de la délivrance du brevet :
**04.01.95 Bulletin 95/01**

(84) Etats contractants désignés :
**DE GB IT**

(56) Documents cités :
**EP-A- 0 054 429
GB-A- 2 034 962
IEEE JOURNAL OF QUANTUM ELECTRONICS,
vol. QE-22, no. 6, juin 1986, pages 797-801,
IEEE, New York, US; P. RABINOWITZ et al.: "A
continuously tunable sequential stokes raman
laser"
OPTICS COMMUNICATIONS, vol. 57, no. 5, 1st
April 1986, pages 360-364, Elsevier Science
Publishers B.V.(North-Holland Physics Publishing Division); L. MANNIK et al.:"Tunable
infrared generation using third stokes output
from a waveguide raman shifter"
APPLIED OPTICS, vol. 28, no. 1, janvier 1989,
pages 135-138, Optical Society of America;C.
GUNTERMANN et al.: "Raman shifting of
Nd:YAG laser radiation in methane: an efficient method to generate 3-mum radiation for
medical uses"**

(73) Titulaire : **THOMSON-CSF
173, Boulevard Haussmann
F-75008 Paris (FR)**

(72) Inventeur : **Pocholle, Jean-Paul
THOMSON-CSF,
SCPI,
Cédex 67
F-92045 Paris la Défense (FR)**
Inventeur : **Papuchon, Michel
THOMSON-CSF,
SCPI,
Cédex 67
F-92045 Paris la Défense (FR)**
Inventeur : **Huignard, Jean-Pierre
THOMSON-CSF,
SCPI,
Cédex 67
F-92045 Paris la Défense (FR)**
Inventeur : **Puech, Claude
THOMSON-CSF,
SCPI,
Cédex 67
F-92045 Paris la Défense (FR)**

(74) Mandataire : **Guérin, Michel et al
THOMSON-CSF
SCPI
B.P. 329
50, rue Jean-Pierre Timbaud
F-92402 Courbevoie Cédex (FR)**

## Description

L'invention concerne un dispositif laser à longueur d'onde élevée et plus particulièrement un laser de puissance accordable à des longueurs d'ondes élevées.

On connaît dans la technique des lasers accordables tel que, par exemple, un laser à base d'un cristal saphir dopé titane qui émet dans un domaine couvrant une fenêtre comprise entre 0,6 et 1,1 micromètres.

On connaît également des dispositifs comportant une cellule Raman excitée par un laser de pompe. On trouvera la description d'un tel dispositif dans la demande de brevet EP-A-0 408 406 considérée en vertu de l'Article 54(3) et (4) comme état de la technique relatif à la présente demande. Une telle cellule Raman est constituée d'une enceinte dans laquelle est comprimé un gaz pouvant être de l'hydrogène, du deutérium ou du méthane. Cette cellule à gaz excitée par un laser de pompe, par exemple un laser à base d'un cristal saphir dopé titane, permet d'engendrer par interaction non linéaire une onde (onde de Stokes) dont la longueur d'onde est accordable dans une fenêtre comprise entre 0,7 et 2 micromètres environ.

Cependant dans certaines applications on peut avoir besoin d'un laser émettant à des longueurs d'ondes élevées, telles que les longueurs d'ondes visibles et accordables dans les grandes plages de longueurs d'ondes.

GB-A-2 034 962 décrit un dispositif laser à longeur d'onde élevée selon le préambule de la revendication 1.

L'invention concerne un laser à longueur d'onde élevée comprenant :
- une source laser de pompe émettant un faisceau de pompe (Fp) d'une longueur déterminée ;
- une enceinte à gaz sous pression dans laquelle est transmis le faisceau de pompe (Fp), le gaz contenu dans l'enceinte étant excité par le faisceau de pompe et donnant lieu par effet Raman à la création d'au moins une onde de Stokes du premier ordre et une onde de Stokes du deuxième ordre ;
- un guide d'onde optique située dans l'enceinte à gaz sur le trajet du faisceau de pompe ;

caractérisé en ce que le guide d'onde optique est fabriqué pour sélectionner en sortie une onde de Stokes d'au moins du deuxième ordre.

Les différentes objets et caractéristiques de l'invention apparaîtront plus clairement dans la description qui va suivre faite à titre d'exemple en se reportant aux figures annexées qui représentent :
- la figure 1, une représentation de base d'un mode de réalisation ;
- la figure 2, un exemple de réalisation plus détaillé ;
- la figure 3, des courbes expliquant le fonctionnement de l'invention ;
- la figure 4, un exemple de réalisation de la cavité optique du dispositif des figures 1 et 2 ;
- les figures 5 à 8, un autre exemple de réalisation de la cavité optique ;
- la figure 9, un mode de réalisation de l'invention ;
- les figures 10 et 11, des exemples de réalisation du guide optique du dispositif de la figure 9 ;
- les figures 12a et 12b, des courbes explicatives des conversions de longueurs d'ondes.

Pour réaliser l'invention, on utilise une onde primaire de puissance ayant le rôle d'onde de pompe et une cuve remplie d'un gaz sous haute pression dans laquelle on fait agir l'onde de pompe pour créer un processus Raman multi-Stokes.

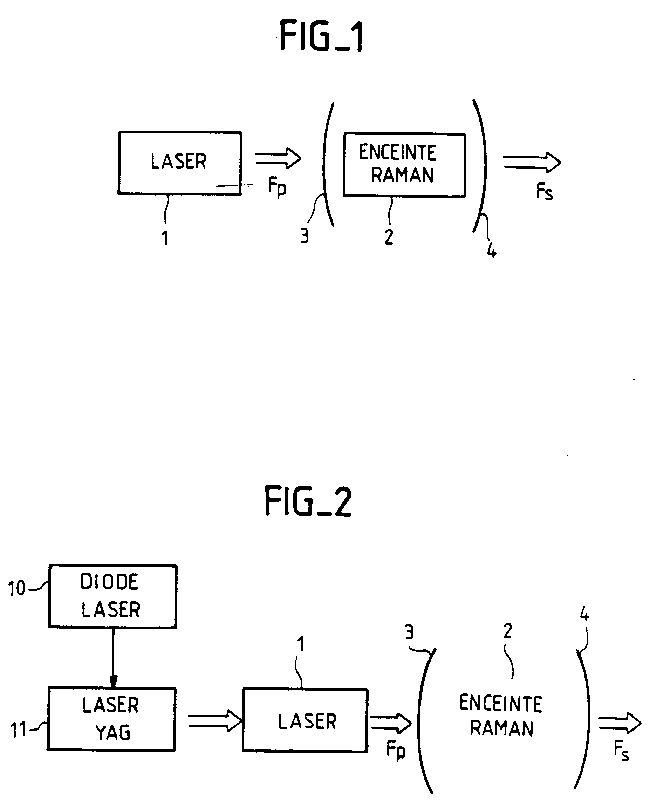

Sur la figure 1, on trouve donc un laser accordable 1 émettant un faisceau de pompe Fp vers une cavité optique 3, 4 dans laquelle se trouve une enceinte 2 sous pression remplie d'un gaz. Les miroirs 3 et 4 de la cavité optique sont tels que le miroir 3 laisse pénétrer le faisceau Fp dans la cavité mais réfléchit vers l'intérieur de la cavité toutes les longueurs d'onde. Le miroir 4 est réfléchissant pour l'onde de Stokes du premier ordre mais laisse passer les faisceaux lumineux de longueurs d'ondes supérieures au premier ordre de l'onde de Stokes.

A titre d'exemple, le laser de pompe est à base d'un cristal Saphir dopé titane et la cellule Raman est constituée d'une enceinte dans laquelle est comprimé un gaz pouvant être de l'hydrogène, du deutérium ou du méthane.

On sait que le laser saphir dopé titane permet de couvrir le domaine spectral allant de 0,65 $\mu$m à 1 $\mu$m en régime continu et de 0,6 $\mu$m à 1,1 $\mu$m en régime impulsionnel. Dans ce dernier cas, on obtient une source parfaitement adaptée pour la réalisation d'interactions non linéaires parmi lesquelles on peut citer l'effet Raman stimulé.

L'association d'un laser saphir dopé titane et d'une cellule à gaz (tel qu'hydrogène, deutérium ou méthane) permet d'engendre par interaction non linéaire une onde couvrant la fenêtre 1 - 9 $\mu$m. Sachant par ailleurs que le domaine d'accordabilité du laser de pompe couvre la fenêtre 0,6 - 1,1 $\mu$m, on réalise ainsi une source accordable à partir d'une composante extrême du visible et s'étalant dans le domaine de l'infrarouge moyen.

L'effet non linéaire s'observe dans les solides, les liquides et les gaz. En particulier, le décalage Raman le plus important a été observé dans l'hydrogène sous pression. Nous rappelons que le décalage en fréquence où l'onde Stokes générée est relié à la longueur d'onde de pompe et à $\Delta\sigma$ (décalage en fréquence Raman) par la relation :

$$\lambda_s = ( \lambda_p^{-1} - \Delta\Gamma )^{-1}$$

Nous voyons ainsi que toute modification de la longueur d'onde de pompe s'accompagne d'une émission Stokes à une longueur d'onde particulière. Ainsi, dans le domaine spectral couvert par l'onde de pompe, il est possible d'engendrer des longueurs d'ondes allant de 0,6 à 13 μm.

Dans le tableau ci-après sont rapportées les longueurs d'ondes des deux premiers ordres Stokes pouvant être obtenus à partir du domaine d'accordabilité caractérisant l'émission d'un laser impulsionnel saphir dopé titane. Le coefficient de gain est également déterminé en fonction de la pression et de la nature du gaz remplissant la cellule Raman. Le coefficient de gain Raman est obtenu à partir de la relation :

$$g_R = \frac{16\, c^2\, \Delta N\, \pi^2}{\hbar\, \omega_s^3\, \Delta\omega_R} \frac{\partial\sigma}{\partial\Omega}$$

dans cette relation,
- c est la vitesse de la lumière dans le vide,
- $\hbar$ est la constante de Planck/$2\pi$ ,
- $\Delta N$ est la densité de molécules caractérisant l'inversion de population, entre les états initiaux et finaux, participant au processus de diffusion inélastique Raman,
  $\omega_s$ représente la fréquence angulaire de l'onde Stokes,
  $\omega_R$ est la largeur à mi-hauteur du profil de la raie définissant le gain Raman,
  et $\partial\sigma/\partial\Omega$ caractérise la section efficace différentielle de la diffusion Raman.

Le gain à la fréquence Stokes $\nu_s = c/\lambda_s$ est alors obtenu à partir de la relation classique :

$$G = g_R\, I_p\, L$$

où Ip est l'intensité de l'onde de pompe ($I_p = P_p/A_{eff}$), L la longueur d'interaction et $A_{eff}$ est une surface effective prenant en compte les intégrales de recouvrement entre modes spatiaux aux fréquences angulaires $\omega_s$ et $\omega_p$.

Dans le montage considéré, on utilise l'onde Stokes générée par l'onde pompe primaire, qui après un certain parcours dans le milieu non linéaire se comporte comme une nouvelle onde de pompe déclenchant un nouveau mécanisme de transfert de puissance de cette onde Stokes ( $\lambda_{s1}$)vers une autre composante Stokes localisée à la longueur d'onde :

$$\lambda_{s2} = (\lambda_{s1}^{-1} - \Delta\sigma )^{-1}$$

Dans le tableau ci-après, nous avons donc calculé la position des premières et secondes raies Stokes en fonction de la nature du milieu Raman et de la longueur d'onde de pompe primaire ($\lambda_p$).

**Hydrogene (100 Amagats)**

| Lambda Pompe (μm) | 1er Stokes (μm) | Gain (cm/GW) | 2ème Stokes (μm) | Gain (cm/Gw) |
|---|---|---|---|---|
| 0,6 | 0,7992 | 2,416 | 1,1966 | 1,613 |
| 1,1 | 2,026 | 0,953 | 12,806 | 0,15 |

**Deutérium (100 Amagats)**

| Lambda Pompe (μm) | 1er Stokes (μm) | Gain (cm/GW) | 2ème Stokes (μm) | Gain (cm/Gw) |
|---|---|---|---|---|
| 0,6 | 0,731 | 0,471 | 0,935 | 0,368 |
| 1,1 | 1,6383 | 0,21 | 3,208 | 0,1073 |

**Méthane (60 Amagats)**

| Lambda Pompe (μm) | 1er Stokes (μm) | Gain (cm/GW) | 2ème Stokes (μm) | Gain (cm/Gw) |
|---|---|---|---|---|
| O,6 | 0,7273 | 0,966 | 0,923 | 0,7613 |
| 1,1 | 1,619 | 0,4338 | 3,07 | 0,2289 |

Nous remarquons que l'emploi de l'hydrogène permet de générer, à partir des composantes spectrales extrêmes émises par le laser de pompe saphir dopé titane, des ondes Stokes comprises entre 1,1966 et 12,8 μm.

Un des avantages propre au laser de pompe réside dans le fait que ce type de laser accordable peut être pompé optiquement par l'intermédiaire d'un laser YAG :Nd doublé en fréquence et lui-même pompé à partir de diodes lasers. Le schéma de base de la source est donc représenté sur la figure 2 par l'association des différents composants :

- laser de pompe de la source accordable
- laser accordable saphir : titane
- cellule Raman

Le laser de pompe primaire peut opérer en régime déclenché. Le laser de pompe est un laser YAG dopé Nd3+ pompé par diodes lasers et doublé en fréquence émettant une onde cohérente à 0,53 μm. Dans ce cas, l'onde émise par le laser saphir dopé titanel se présente sous forme impulsionnelle et peut être accordée spectralement en utilisant un montage dispersif de type réseau constituant un des miroirs de la cavité ou un système de filtres biréfringents insérés dans la cavité.

La figure 2 représente un exemple de réalisation détaillé. Ce dispositif comporte une diode laser 10 émettant un faisceau de longueur d'onde 0.808 μm pompant un cristal YAG11. L'émission laser est ensuite doublée en fréquence 11 et on obtient alors un faisceau de longueur d'onde 0,532 μm permettant de pomper le laser 1 saphir dopé titane qui émet un faisceau de pompe vers la cavité Raman 2. La cavité Raman est une enceinte à gaz sous pression dont les faces 3 et 4 constituent la cavité optique. Ces faces 3 et 4 ont des propriétés de réflexions telles que celles des miroirs 3 et 4 de la figure 1.

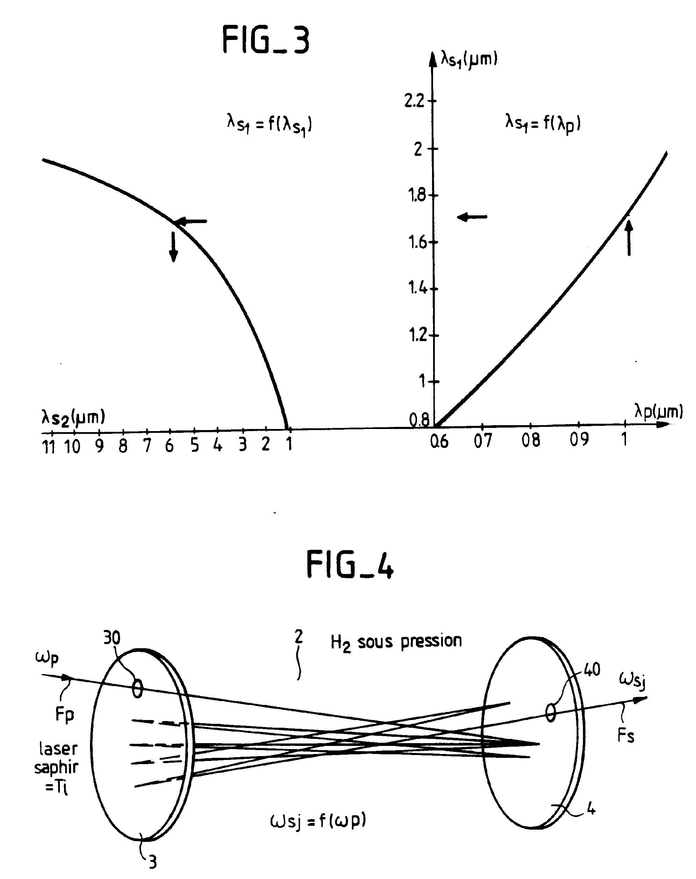

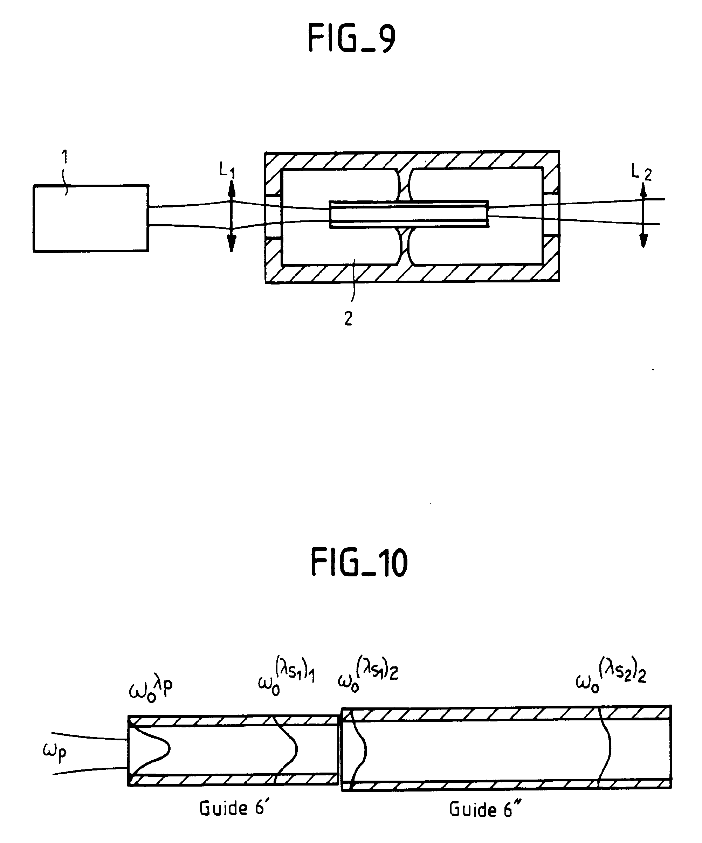

Sur la figure 3 nous avons tracé la position des longueurs d'ondes Stokes émises par une cellule Raman d'hydrogène en fonction de la longueur d'onde de pompe émise par le laser saphir dopé titane. Sur la partie droite de la figure on obtient, à partir de la longueur d'onde de pompe émise par un laser saphir dopé titane, la longueur d'onde de Stokes du premier ordre émise par la cellule Raman. Sur la partie gauche de la figure, on obtient à partir de l'onde de Stokes du 1er ordre, la longueur d'onde de Stokes d'émission du second ordre. On peut par exemple observer que l'emploi d'une source de pompe centrée à $\lambda$ p=1μm engendre dans l'hydrogène une raie Stokes à 1,71 μm. Cette émission peut elle-même donner lieu à la création d'une seconde raie Stokes localisée à 5,197 μm.

La figure 4 représente un exemple de réalisation de la cavité optique 3, 4 et de la cellule Raman 2.

La cellule Raman placée en aval de la source accordable primaire (laser saphir dopé titane) est constituée d'une enceinte hermétiquement fermée et tenant sous haute pression. Cette cellule est constituée d'une cavité avec deux miroirs 3, 4. Le premier miroir 3 est à haute réflectivité sur le domaine spectral compris entre la longueur d'onde 0,6 μm et 13 μm. Le second miroir 4 présente les mêmes caractéristiques avec une ouverture de sortie 40. L'injection de l'onde pompe Fp se fait par l'intermédiaire d'une ouverture 30 dans le miroir 3.

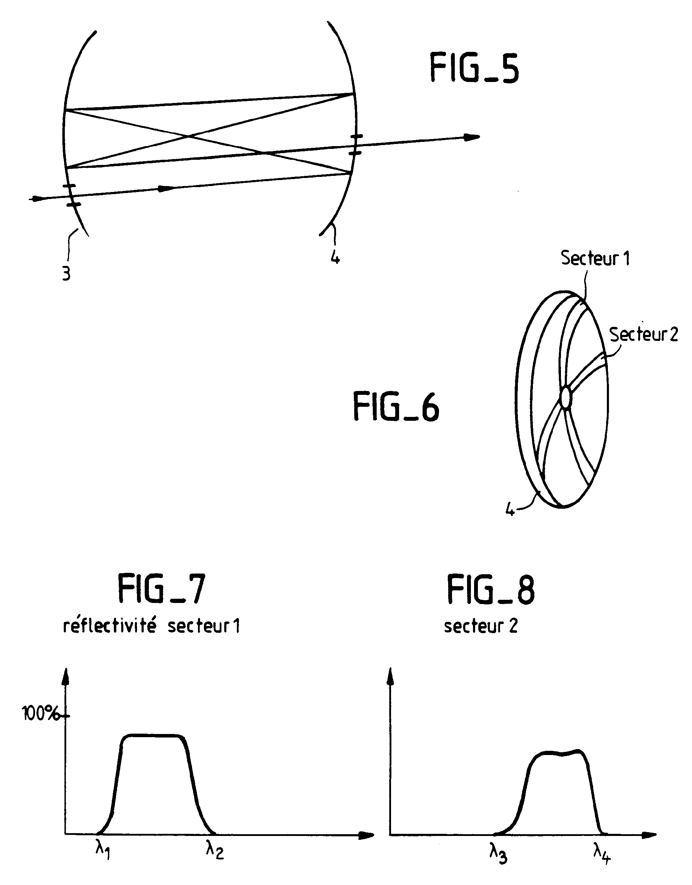

Les ouvertures 30 et 40 ne sont pas situées toutes les deux selon la direction du faisceau de pompe excitant le gaz de l'enceinte 2. L'onde de pompe subit donc de multiples réflexion entre les deux miroirs 3, 4 jusqu'à subir une totale déplétion. L'emploi de miroirs métallisés permet de réaliser un système achromatique multipassages. Dans ce cas, il suffit de modifier le niveau de la puissance de pompe injectée pour couvrir le domaine spectral propre à l'émission couverte par le premier ou le second ordre Stokes. Les figures 5 à 8 représentent un autre exemple de réalisation de la cellule Raman. Le miroir 3 présente les mêmes propriétés que précédemment. Seul le miroir de sortie 4 présente des secteurs (secteur 1, secteur 2) de réflectivités différentes de façon à fournir une réflectivité spectrale ayant une dépendance azimuthale et symétrique dans le plan.

Les figures 7 et 8 représentent à titre d'exemple des diagrammes de réflectivités des secteurs 1 et 2 du miroir 4.

Ainsi, par une rotation du miroir de sortie 4, il est possible de déterminer la composante Raman et la longueur d'onde pouvant être émise. Chaque secteur radial permet d'adapter la réflectivité sur un domaine spectral donné. Les réflexions successives s'établissent dans un plan méridien qui est conservé.

L'onde émise est colinéaire avec l'onde de pompe et un contrôle du paramètre confocal de la cavité peut être obtenu en déplaçant le miroir 4 par rapport au miroir 3 à l'aide d'un montage mobile commandé électriquement.

L'emploi d'une véritable cavité confocale peut également être considéré.

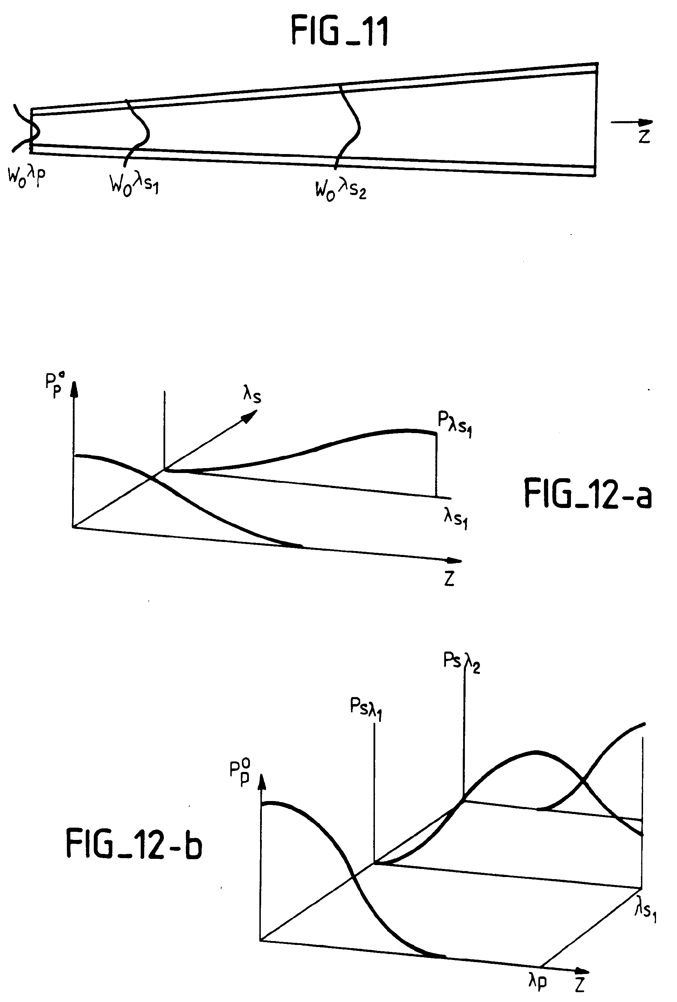

La figure 9 représente un mode de réalisation de l'invention dans lequel un guide d'onde diélectrique creux est placé dans la cellule Raman. Dans ce cas on optimise le couplage entre le mode $TEM_{00}$ de l'onde pompe primaire et le mode $EH_{11}$ de la structure guide d'onde.

Ce guide creux est constitué soit d'un capillaire à base de verre fluoré ou d'un matériau chalcogénure selon le gaz et le domaine spectral couvert, soit d'un guide métallique. Le guide est délocalisé par rapport à la fenêtre d'injection constituée d'une lame de silice traîtée antireflet entre 0,6 et 1,1 μm. Dans le cas où l'on cherche à obtenir des composantes spectrales fortement éloignées dans le moyen infrarouge, la fenêtre de sortie 8 peut être constituée d'une lame en fluorure de baryum ($BaF_2$). Les fenêtres d'entrée ne constituent pas alors, dans ce mode de réalisation, une cavité optique.

La longueur du guide creux est optimisée de façon à obtenir en sortie une onde de Stokes de longueur d'onde supérieure au premier ordre. Cette optimisation conduit à avoir une longueur du guide creux de l'ordre du mètre.

La figure 10 représente une variante de réalisation de la figure 9 dans laquelle le guide creux est réalisé sous la forme de deux guides creux 6′ et 6″ mis bout à bout selon la direction du faisceau de pompe. Les deux guides 6′ et 6″ sont réalisés en matériaux différents. Le premier guide 6′ est en matériau présentant une faible absorption sur le domaine spectral couvert par le premier Stokes (entre 0,8 et 2,1 μm par exemple). Le deuxième guide 6″ est réalisé en matériau absorbant en dehors du domaine spectral 2,1 - 12 μm ; il constitue un guide efficace pour les ondes de ce domaine spectral.

A titre d'exemple, pour ces exemples de longueurs d'ondes, les matériaux des guides sont :
- pour le premier guide 6′ : verre fluoré
- pour le deuxième guide 6″ : tube en Be0

Les guides 6′ et 6″ sont également optimisés en géométrie pour accroître le rendement de conversion pour les ondes Stokes d'ordre un et deux.

Selon les exemples précédents les dimensions des guides sont les suivantes :
- Pour le guide 6′ :
    Diamètre interne du guide : 15 μm
    Longueur du guide : 1 mètre environ
- Pour le guide 6″ :
    Diamètre interne du guide :100 μm
    Longueur du guide : 1 mètre environ

Avec l'emploi d'un guide métallique, il est possible d'adapter une configuration présentant un domaine spectral d'émission large. On utilise dans ce cas une structure guide optique avec couplage adiabatique du mode réalisée en utilisant un écartement entre plaques variant liénairement avec la distance. Ceci permet de modifier la dimension du mode et de conserver le caractère monomode de celui-ci sur un large domaine spectral. Une extension de ce principe peut s'adapter au cas d'un guide creux cylindrique en utilisant un capillaire de forme conique. La longueur d'onde émise peut dans ce cas être contrôlée par l'intermédiaire d'un ajustement de la puissance de pompe employée. Cette structure est présentée sur la figure 11. La dépendance des puissances pompe et Stokes est représentée sur les figures 12a et 12b en fonction du niveau de puissance incident à l'entrée du guide Raman.

La figure 12a représente un diagramme de conversion d'une onde de pompe (courbe Fp) en onde de Stokes $Fs_1$. La figure 12b représente un diagramme de conversion d'une onde de pompe (Fp) pour obtenir une onde de Stokes du premier ordre ($Fs_1$) puis une onde de Stokes du deuxième ordre ($Fs_2$).

Selon la description qui précède, l'invention concerne donc bien un laser accordable à base d'un laser de pompe lui-même accordable sur un domaine spectral couvrant par exemple une fenêtre 0,6 - 1,1 μm. Ce laser vient engendrer, à partir d'un processus non linéaire de type Raman et selon un mécanisme multi-Stokes, de nouvelles fréquences avec un décalage spectral correspondant au décalage Raman du gaz employé.

Par exemple, à partir d'un laser saphir dopé titane et d'une cellule Raman contenant de l'hydrogène sous haute pression, il est en effet possible d'obtenir une émission s'étendant de 0,6 μm à 1,3 μm.

Une telle source présente certains avantages comparativement aux autres types de sources accordables à base d'effets paramétriques (oscillateur paramétrique) :
- domaine d'accordabilité plus élevé allant du visible à l'infrarouge
- domaine de transparence du milieu Raman étendu
- tenue au flux et seuil du dommage optique plus élevés ; par ailleurs le dommage optique (claquage optique) n'est pas irréversible puisque le milieu sous forme gazeux est naturellement régénéré
- accord de phase naturel, ce qui ne nécessite pas l'emploi d'un angle particulier d'attaque de la cellule et une rotation de celui-ci. Cet auto-accord de phase spécifique à l'effet Raman stimulé minimise la dépendance de l'interaction non linéaire avec la température (vis-à-vis de variations situées autour de la température ambiante)
- émission colinéaire quelle que soit la longueur d'onde générée.

**Revendications**

1. Laser à longueur d'onde élevée, comprenant :
   - une source laser de pompe (1) émettant un faisceau de pompe (Fp) d'une longueur déterminée ;
   - une enceinte à gaz (2) sous pression dans laquelle est transmis le faisceau de pompe (Fp), le gaz contenu dans l'enceinte étant excité par le faisceau de pompe et donnant lieu par effet Raman à la création d'au moins une onde de Stokes du premier ordre et une onde de Stokes du deuxième ordre ;
   - un guide d'onde optique située dans l'enceinte à gaz sur le trajet du faisceau de pompe ;
   caractérisé en ce que le guide d'onde optique est fabriqué pour sélectionner en sortie une onde de Stokes d'au moins du deuxième ordre.

2. Laser selon la revendication 1, caractérisé en ce que le guide d'onde optique comporte une première section de guide (6′) sélectionnant une onde à la longueur d'onde de Stokes du premier ordre et la transmettant à une deuxième section de guide (6″) laquelle sélectionne une onde à la longueur d'onde de Stokes du deuxième ordre.

3. Laser selon la revendication 1, caractérisé en ce que le guide d'onde optique est conique de façon à sélectionner sur une première partie une onde de Stokes du premier ordre et, sur une deuxième partie une onde de Stokes du deuxième ordre.

4. Laser selon la revendication 1, caractérisé en ce que le gaz de l'enceinte (2) est de l'hydrogène, du deutérium ou du méthane.

**Patentansprüche**

1. Laser für große Wellenlängen,
   - mit einer Pumplaserquelle (1), die einen Pumpstrahl (Fp) einer bestimmten Wellenlänge aussendet,
   - mit einem Druckgasgefäß (2), in das der Pumpstrahl (Fp) übertragen wird, wobei das in dem Gefäß enthaltene Gas durch den Pumpstrahl angeregt wird und aufgrund des Ramaneffekts mindestens eine Stokeswelle erster Ordnung und eine Stokeswelle zweiter Ordnung erzeugt,
   - mit einem Lichtwellenleiter, der sich im Gasgefäß im Verlauf des Pumpstrahls befindet, dadurch gekennzeichnet, daß der Lichtwellenleiter so hergestellt wird, daß er am Ausgang eine Stokeswelle mindestens der zweiten Ordnung auswählt.

2. Laser nach Anspruch 1, dadurch gekennzeichnet, daß der Lichtwellenleiter einen ersten Lichtwellenleiterabschnitt (6′) enthält, der eine Welle der Stokeswellenlänge erster Ordnung auswählt und sie an einen zweiten Lichtwellenleiter (6″) überträgt, der eine Welle mit der Stokeswellenlänge zweiter Ordnung auswählt.

3. Laser nach Anspruch 1, dadurch gekennzeichnet, daß der Lichtwellenleiter konisch ist, so daß er in einem ersten Bereich eine Stokeswelle der ersten Ordnung und in einem zweiten Bereich eine Stokeswelle der zweiten Ordnung auswählt.

4. Laser nach Anspruch 1, dadurch gekennzeichnet, daß das Gas im Gefäß (2) Wasserstoff, Deuterium oder Methan ist.

**Claims**

1. Long-wavelength laser, comprising:
   - a pumping laser source (1) emitting a pumping beam (Fp) of determined length;
   - a pressurized gas chamber (2) into which the pumping beam (Fp) is transmitted, the gas contained in the chamber being excited by the pumping beam and giving rise by Raman effect to the creation of at least one first-order Stokes wave and one second-order Stokes wave;
   - an optical waveguide located in the gas chamber on the path of the pumping beam; characterized in that the optical waveguide is manufactured in order to select as output one Stokes wave at least of second order.

2. Laser according to Claim 1, characterized in that the optical waveguide includes a first guide section (6') selecting a wave at the first-order Stokes wavelength and transmitting it to a second guide section (6") which selects a wave at the second-order Stokes wavelength.

3. Laser according to Claim 1, characterized in that the optical waveguide is conical so as to select on a first part a first-order Stokes wave and, on a second part, a second-order Stokes wave.

4. Laser according to Claim 1, characterized in that the gas in the chamber (2) is hydrogen, deuterium or methane.

# FIG_1

# FIG_2

# FIG_3

$\lambda_{s_1} = f(\lambda_{s_1})$

$\lambda_{s_1} = f(\lambda_p)$

$\lambda_{s_1}(\mu m)$

2.2

2

1.8

1.6

1.4

1.2

1

0.8

$\lambda_{s_2}(\mu m)$

11  10  9  8  7  6  5  4  3  2  1

$\lambda p(\mu m)$

0.6   07   08   09   1

# FIG_4

$\omega_p$

30

Fp

laser
saphir
=Ti

3

2   $H_2$ sous pression

40   $\omega_{sj}$

Fs

4

$\omega_{sj} = f(\omega p)$

# FIG_9

# FIG_10

Guide 6′       Guide 6″

# FIG_5

3

4

# FIG_6

Secteur 1

Secteur 2

4

# FIG_7

réflectivité secteur 1

100%

$\lambda_1$ $\lambda_2$

# FIG_8

secteur 2

$\lambda_3$ $\lambda_4$

# FIG_11

$W_0\lambda_P$   $W_0\lambda_{S_1}$   $W_0\lambda_{S_2}$

$z$

$P_P^a$

$\lambda_S$

$P\lambda_{S_1}$

$\lambda_{S_1}$

$Z$

# FIG_12-a

# FIG_12-b

$Ps\lambda_2$

$Ps\lambda_1$

$P_P^O$

$\lambda_{S_1}$

$\lambda_P$   $Z$